# EUROPEAN PATENT SPECIFICATION

(11) **EP 0 926 392 B1**
(45) Date of publication and mention of the grant of the patent: **01.02.2006**
(21) Application number: 98122768.9
(22) Date of filing: 01.12.1998
(51) Int. Cl.: F16G 3/02, F16G 3/06

(54) **Transmission chain**
Triebkette
Chaine de transmission

(30) Priority: 24.12.1997 JP 35554797
(43) Date of publication of application: 30.06.1999
(73) Proprietor: Tsubakimoto Chain Co., Osaka 530-0018, (JP)
(72) Inventor: Ichikawa, Kouichi, Hiki-gun, Saitama-ken (JP); Kozakura, Nobuto, Hanno-shi, Saitama-ken (JP); Haginoya, Tsutomu, Iruma-shi, Saitama-ken (JP); Saitou, Toyonaga, Hanno-shi, Saitama-ken (JP)
(74) Representative: Naumann, Ulrich

(56) References cited:
- US-A- 1 709 802
- US-A- 2 498 788
- US-A- 4 117 738
- US-A- 4 463 550
- US-A- 4 571 228

## Description

### BACKGROUND OF THE INVENTION

### Field of the Invention:

The present invention relates to a transmission chain according to the preamble part of the claim, such as a silent chain or a bushed chain, in which bushes are used.

### Description of the Related Art:

Conventionally, some transmission chains such as timing chains used in engines have utilized cylindrical hollow bushes rotatably fitted onto the outer circumferential surfaces of pins. In such a transmission chain, in the longitudinal direction of the chain there are alternately arranged a row of plates through which a pin is directly inserted without use of a bush, and a row of plates through which a pin is inserted with a bush interposed between the pin and the plates.

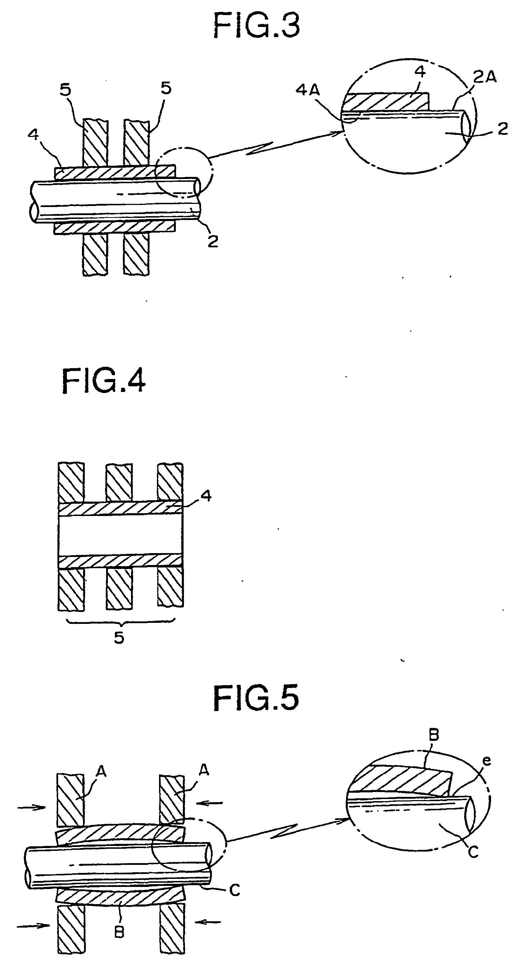

In the conventional transmission chain in which bushes are used, as shown in FIG. 5, two plates A are attached to opposite ends of a bush B during assembly of the chain such that the opposite ends of the bush B are press-fitted into bush holes formed in the plates A. Therefore, when the plates A are attached to the ends of the bush B, the bush B receives an axial compression force, so that the center portion of the bush B tends to expand radially outward and the bush B assumes the shape of a barrel.

Consequently, the inner circumferential surface of the bush B does not achieve full surface contact with the outer circumferential surface of the pin C, with the result that only inner circumferential edge portions e at the opposite ends of the bush B come into contact with the outer circumferential surface of the pin C. Therefore, at the initial stage of use of the chain, the inner circumferential edge portions e and those portions of the outer circumferential surface of the pin C that are in contact with the edge portions undergo local wear. Especially, since wear of the inner circumferential edge portions e is considerable, the entire chain elongates to a large extent within a short period of time.

When such local wear proceeds and the bush B and the pin C start to establish full surface contact therebetween, the elongation of the chain stops substantially. However, such elongation at the initial stage of use of the chain increases noise generated due to meshing engagement between the chain and sprockets, and often causes skipping of teeth.

Especially, when a chain having bushes is used as a timing chain for transmitting rotation of the crankshaft of an engine to the camshaft thereof, elongation of the chain results in out-of-syncron drive timing of the camshaft, which causes considerable adverse effects.

From US-A-4,463,550 is known a transmission chain according to the preamble part of the only claim. The conventional transmission chain is showing a link pack 36 being composed of three joint-row plates 40, 42 and 44 press-fitted on a bush 50. The three joint-row plates are positioned adjacent to another and being dimensioned to completely cover the bush 50. Thus, the three joint-row plates have to be produced with high accuracy.

### SUMMARY OF THE INVENTION

An object of the present invention is to solve the above-mentioned problems involved in conventional transmission chains, and to provide a transmission chain which can prevent local wear of pins and bushes, thereby suppressing elongation of the chain at the initial stage of use.

To achieve the above object, the present invention provides a transmission chain according to the only claim.

In the transmission chain of the present invention, the center portion of a bush can be prevented from expanding radially outward in the shape of a barrel during assembly of the chain, which expansion would otherwise occur due to an axial compression force applied to the bush during the assembly. Therefore, from the initial stage of use of the chain, full surface contact can be established between the inner circumferential surface of the bush and the outer circumferential surface of a corresponding pin.

As a result, there can be prevented elongation of the chain at the initial stage of use of the chain which would otherwise occur due to local wear of pins and bushes. Therefore, there can be prevented, for a long period of time, an increase in noise generated due to meshing engagement between the chain and sprockets, as well as skipping of teeth. Further, the accuracy of the chain can be maintained for a long period of time.

### BRIEF DESCRIPTION OF THE DRAWINGS

Various other objects, features and many of the attendant advantages of the present invention will be readily appreciated as the same becomes better understood by reference to the following detailed description of the preferred embodiment when considered in connection with the accompanying drawings, in which:
FIG. 1 is a plan view of a conventional transmission chain;
FIG. 2 is a side view of the conventional transmission chain;
FIG. 3 is a sectional view showing a state in which plates are attached to a bush of the conventional transmission chain;
FIGS. 4 is a selectional view showing a state in which plates are attached to a bush of a transmission chain according to an embodiment of the present invention; and
FIG. 5 shows a state of contact between a pin and a bush in a conventional transmission chain.

### DESCRIPTION OF THE PREFERRED EMBODIMENT

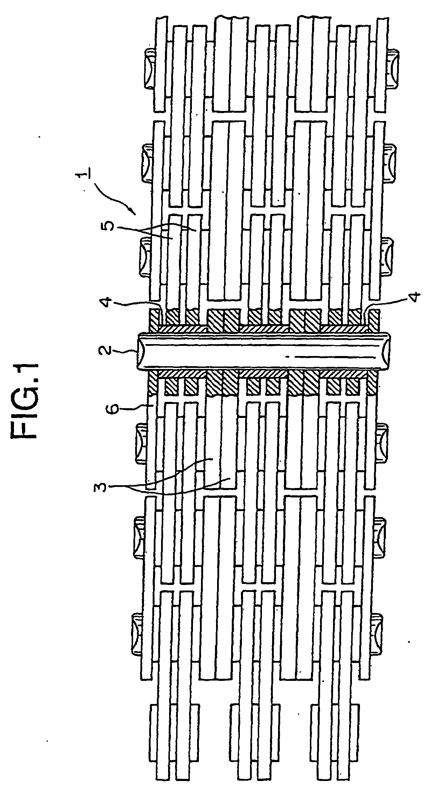

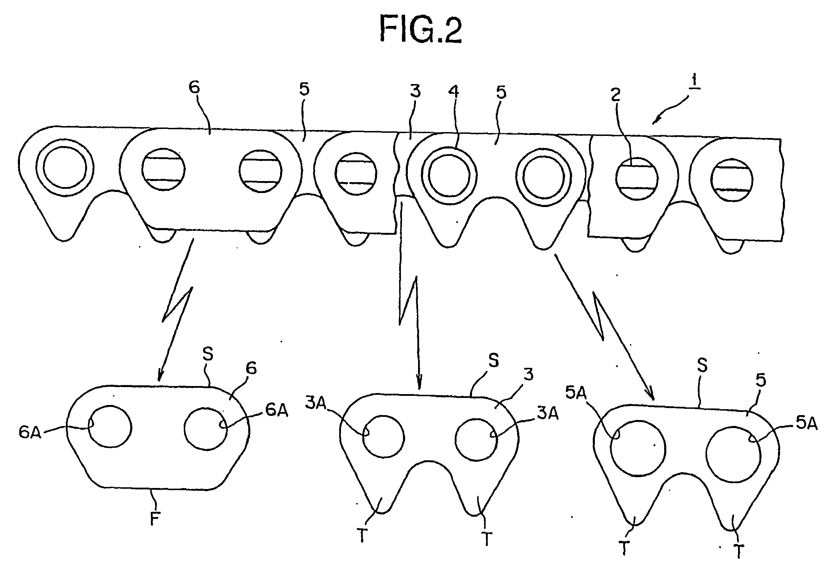

An embodiment of the present invention will next be described with reference to the drawings. A transmission chain according to the present embodiment is one type of a silent chain used as a timing chin for an engine. FIG. 1 shows a partial plan view of a conventional transmission chain, and FIG. 2 shows a partial side view of the transmission chain.

As shown in FIGS. 1 and 2, a silent chain (hereinafter referred to as a "chain") 1 includes guide-row plates 3, joint-row plates 5, and guide plates 6. Each of the guide-row plates 3 has a pair of pin holes 3A into which pins 2 are inserted. Each of the joint-row plates 5 has a pair of bush holes 5A into which bushes 4 are inserted. Each of the guide plates 6 has a pair of pin holes 6A into which the pins 2 are press-fitted to be fixed thereto.

Although not illustrated in FIGS. 1 and 2, the chain 1 is fitted around and extends between a driving sprocket attached to a crankshaft of an engine and a driven sprocket attached to a camshaft of the engine, in order to transmit power between the shafts. Meshing teeth T for achieving meshing engagement with these sprockets are formed at sides of the guide-row plates 3 and the joint-row plates 5, which sides form an inner circumference of the chain 1.

At each side of the guide plates 6, which side forms the inner circumference of the chain 1, there are formed not meshing teeth but a straight edge portion F. In the vicinity of the edge portion F, the inner surface of the guide plate 6 comes into contact with side surfaces of meshing teeth of the sprockets to be guided thereby.

In the chain 1, three bushes 4 are rotatably supported on a single pin 2. Two guide-row plates 3, which are in close contact with each other, are sandwiched between two adjacent bushes 4. The opposite end portions of the pin 2 are securely fitted into and thereby fixed to the pin holes 6A of the guide plates 6 disposed on opposite transversal sides of the chain 1.

FIG. 3 shows a state in which the joint-row plates 5 are attached to the bush 4 in the chain 1 shown in FIGS. 1 and 2. Two joint-row plates 5 are fitted onto and thereby fixed to a single bush 4.

These joint-row plates 5 are disposed at positions offset from the opposite end surfaces of the bush 4 toward the central portion thereof. When the bush 4 is inserted into one of the bush holes 5A (see FIG. 2) of the joint-row plates 5 during assembly of the chain 1, the joint-row plates 5 are disposed at positions offset from the opposite end surfaces of the bush 4, so that the joint-row plates 5 prevent radially outward expansion or deformation of the central portion of the bush 4, which would otherwise occur due to an axial compression force acting on the bush 4. As a result, the parallelism of the inner circumferential surface 4A of the bush 4 is maintained, and therefore full surface contact is established between the inner circumferential surface 4A of the bush 4 and the outer circumferential surface 2A of the pin 2.

FIGS. 4 shows an embodiment of the present invention, wherein three joint-row plates 5 are fitted onto a single bush 4 at opposite ends and the center portion thereof.

As in FIG. 3, in the embodiment shown in FIG. 4, the joint-row plates 5―which are fitted onto the outer circumferential surface of the bush 4 at the center position thereof―prevents the central portion of the bush 4 from expanding and deforming into the shape of a barrel, which expansion and deformation would otherwise occur during assembly. As a result, the parallelism of the inner circumferential surface 4A of the bush 4 is maintained after the attachment of the joint-row plates 5 onto the bush 4.

In the above-described embodiments, a description is given of a silent chain which uses three kinds of plates; i.e., joint-row plates, guide-row plates, and guide plates. However, present invention is not limited to the silent chain and is similarly applicable to bushed chains in which bushes come into meshing engagement with sprockets.

Obviously, numerous modifications and variations of the present invention are possible within the scope of the appended claims.

## Claims

1. A transmission chain (1) comprising:
a plurality of joint-row plates (5) each having a pair of bush holes (5A);
a plurality of cylindrical hollow bushes (4), each bush (4) being press-fitted into one of the bush holes (5A) of the joint-row plates (5); and
a plurality of pins (2), each pin (2) being inserted into one of the bushes (4) in order to rotatably support the corresponding bush (4), so that the axially centered portion of the bush (4) is prevented from expanding radially outwardly, even during the press-fitting of the bush into the joint-row plate (5), thereby maintaining the parallelism of the inner circumferential surface of the bush (4) and the outer circumferential surface of the pin (2),
**characterized in that** three axially spaced apart joint-row plates (5) are fitted onto each bush (4) at opposite ends and an axially centered position of the bush (4).

## Patentansprüche

1. Übertragungskette (1), umfassend:
eine Vielzahl von Gelenkreihenlaschen (5), die jeweils ein Paar von Hülsenlöchern (5A) aufweisen,
eine Vielzahl von zylindrischen hohlen Hülsen (4), wobei jede Hülse (4) in eines der Hülsenlöcher (5A) der Gelenkreihenlaschen (5) eingepresst ist, und
eine Vielzahl von Stiften (2), wobei jeder Stift (2) in eine der Hülsen (4) eingesteckt ist, um die entsprechende Hülse (4) drehbar zu lagern, so dass ein radial nach außen gerichtetes Erweitern des axial mittigen Abschnitts der Hülse (4) selbst während des Einpressens der Hülse in die Gelenkreihenlasche (5) verhindert wird, wodurch die Parallelität der inneren Umfangsfläche der Hülse (4) und der äußeren Umfangsfläche des Stifts (2) aufrechterhalten wird,
**dadurch gekennzeichnet, dass** drei axial voneinander beabstandete Gelenkreihenlaschen (5) auf jeder Hülse (4) an entgegengesetzten Enden und an einer axial mittigen Position der Hülse (4) angeordnet sind.

## Revendications

1. Une chaîne de transmission (1) comprenant :
une pluralité de plaques assemblées en ligne (5) ayant chacune une paire de trous de douille (5A) ;
une pluralité de douilles (4) cylindriques creuses, chaque douille (4) étant forcée dans l'un des trous de douilles (5A) des plaques assemblées en ligne (5) ; et
une pluralité de broches (2), chaque broche (2) étant insérée dans l'une des douilles (4) afin de supporter à rotation la douille (4) correspondante de telle manière que la portion centrée axialement de la douille (4) est empêchée de se dilater radialement vers l'extérieur, même pendant le forçage de la douille dans la plaque assemblée en ligne (5), en maintenant de ce fait le parallélisme de la surface circonférentielle intérieure de la douille (4) et de la surface circonférentielle extérieure de la broche (2),
**caractérisée par le fait que** trois plaques assemblées en ligne (5) écartées axialement sont fixées sur chaque douille (4) à des extrémités opposées et une position centrée axialement de la douille (4).
